# EUROPEAN PATENT SPECIFICATION

(11) **EP 4 520 513 B1**
(45) Date of publication and mention of the grant of the patent: **18.03.2026**
(21) Application number: 24190478.8
(22) Date of filing: 23.07.2024
(51) Int. Cl.: B29C 73/16

(54) **MIXING DEVICE, MIXING METHOD, BOTTLE UNIT, AND PUNCTURE REPAIR KIT**
MISCHVORRICHTUNG, MISCHVERFAHREN, FLASCHENEINHEIT UND PUNKTIONSREPARATURKIT
DISPOSITIF DE MÉLANGE, PROCÉDÉ DE MÉLANGE, UNITÉ DE BOUTEILLE ET KIT DE RÉPARATION DE CREVAISON

(30) Priority: 05.09.2023 JP 2023143852
(43) Date of publication of application: 12.03.2025
(73) Proprietor: SUMITOMO RUBBER INDUSTRIES, LTD., Kobe-shi, Hyogo 651-0072 (JP)
(72) Inventor: KAZUHIRO, Tatsumi, Hyogo, 651-0072 (JP)
(74) Representative: Forresters IP LLP

(56) References cited:
- DE-A1- 102018 219 038
- US-B2- 6 736 170

## Description

### BACKGROUND OF THE INVENTION

### Field of the Invention

The present invention relates to a mixing device for mixing a puncture repair liquid and compressed air, a mixing method using the mixing device, a bottle unit including the mixing device, and a puncture repair kit including the bottle unit.

### Background Art

Hitherto, a puncture repair kit for repairing an object such as a punctured tire has been known. For example, Japanese Laid-Open Patent Publication No. 2017-056662 proposes a puncture repair kit for repairing a punctured object by sequentially injecting a puncture repair liquid and compressed air into the punctured object using compressed air from a compressor.

However, with the puncture repair kit of Japanese Laid-Open Patent Publication No. 2017-056662, the remaining puncture repair liquid may flow back to the compressor when the compressor is stopped before the total amount of the puncture repair liquid is supplied.

The present invention has been made in view of the above circumstances, and a main object of the present invention is to provide a mixing device, a mixing method, a bottle unit, and a puncture repair kit that can suppress backflow of a puncture repair liquid when supply of compressed air is stopped.

DE 10 2018 219038 A1 discloses a mixing device according to the preamble of claim 1.

### SUMMARY OF THE INVENTION

The present invention is directed to a mixing device including: a mixing chamber which defines a space for mixing a puncture repair liquid and compressed air; a first inlet for supplying the compressed air to the mixing chamber; a second inlet for supplying the puncture repair liquid to the mixing chamber; and an outlet for discharging a mixture of the puncture repair liquid and the compressed air from the mixing chamber, wherein the mixing chamber includes an upper member which defines a top surface of the space, and a lower member which defines a bottom surface of the space, in a state of use, the second inlet is formed in the upper member, and the upper member moves in a direction away from the bottom surface due to supply of the compressed air to provide communication between the second inlet, and the first inlet and the outlet via the mixing chamber, and moves toward the bottom surface due to stop of the supply of the compressed air to close the communication between the second inlet, and the first inlet and the outlet.

As a result of having the above-described configuration, the mixing device of the present invention can suppress backflow of the puncture repair liquid even when supply of the compressed air is stopped.

### BRIEF DESCRIPTION OF THE DRAWINGS

FIG. 1 is a cross-sectional view schematically showing one embodiment of a puncture repair kit of the present invention;
FIG. 2 is a cross-sectional view of the puncture repair kit in FIG. 1 when supply of compressed air is stopped;
FIG. 3 is a plan view of an upper member;
FIG. 4 is a graph showing an example of the pressure in a mixing chamber when the compressed air is supplied;
FIG. 5 is a flowchart of a mixing method of the embodiment;
FIG. 6 is a cross-sectional view of a puncture repair kit of a second embodiment;
FIG. 7 is a cross-sectional view of a puncture repair kit of a third embodiment;
FIG. 8 is a cross-sectional view of a puncture repair kit of a fourth embodiment before supply of compressed air starts;
FIG. 9 is a cross-sectional view of a puncture repair kit of a fifth embodiment;
FIG. 10 is a cross-sectional view of the puncture repair kit in FIG. 9 when supply of compressed air is stopped;
FIG. 11 is a cross-sectional view of a puncture repair kit of a sixth embodiment;
FIG. 12 is a cross-sectional view of the puncture repair kit in FIG. 11 when supply of compressed air is stopped;
FIG. 13 is a cross-sectional view of a puncture repair kit of a seventh embodiment;
FIG. 14 is a plan view of an upper member of the seventh embodiment; and
FIG. 15 is a plan view of an upper member of another embodiment.

### DETAILED DESCRIPTION

Hereinafter, an embodiment of the present invention will be described in detail with reference to the drawings.

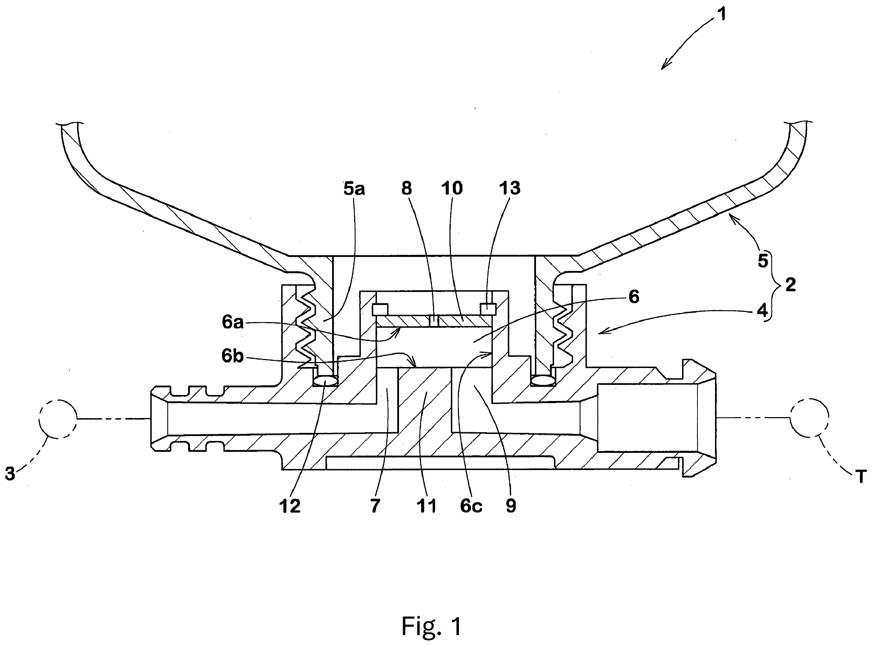

FIG. 1 is a cross-sectional view schematically showing a puncture repair kit 1 of the present embodiment. As shown in FIG. 1, the puncture repair kit 1 is suitably used, for example, for filling an object T, such as a punctured tire, with a puncture repair liquid R and compressed air A.

The puncture repair kit 1 of the present embodiment includes a bottle unit 2 for supplying a mixture of the puncture repair liquid R and the compressed air A, and a compressor 3 for supplying the compressed air A. The bottle unit 2 of the present embodiment includes a mixing device 4 for mixing the puncture repair liquid R and the compressed air A, and a container 5 for containing the puncture repair liquid R.

In such a bottle unit 2, it is easy to attach the mixing device 4 and the container 5 to each other, so that the bottle unit 2 serves to shorten the time required for puncture repair. In addition, the mixing device 4 can mix the puncture repair liquid R and the compressed air A in advance before filling the object T, thereby shortening the time required for puncture repair.

The mixing device 4 of the present embodiment includes a mixing chamber 6 which defines a space for mixing the puncture repair liquid R and the compressed air A. The mixing device 4 preferably includes a first inlet 7 for supplying the compressed air A to the mixing chamber 6, and a second inlet 8 for supplying the puncture repair liquid R to the mixing chamber 6. The mixing device 4 of the present embodiment includes an outlet 9 for discharging the mixture of the puncture repair liquid R and the compressed air A from the mixing chamber 6.

The mixing chamber 6 of the present embodiment includes an upper member 10 which defines a top surface 6a of the space, and a lower member 11 which defines a bottom surface 6b of the space, in a state of use. The second inlet 8 is formed in the upper member 10 of the present embodiment. For example, the first inlet 7 and the outlet 9 are formed in the lower member 11.

It is preferable that the upper member 10 moves in a direction away from the bottom surface 6b due to the supply of the compressed air A to provide communication between the second inlet 8, and the first inlet 7 and the outlet 9 via the mixing chamber 6. The upper member 10 of the present embodiment moves in the direction away from the bottom surface 6b due to the supply of the compressed air A to open the second inlet 8. The mixing chamber 6 of the present embodiment is formed as a result of the movement of the upper member 10 due to the supply of the compressed air A. Such a mixing chamber 6 can be repeatedly brought into a positive pressure state and a negative pressure state by pulsation of the compressed air A supplied from the compressor 3, thereby dripping the puncture repair liquid R from the second inlet 8 into the mixing chamber 6 to produce a mixture.

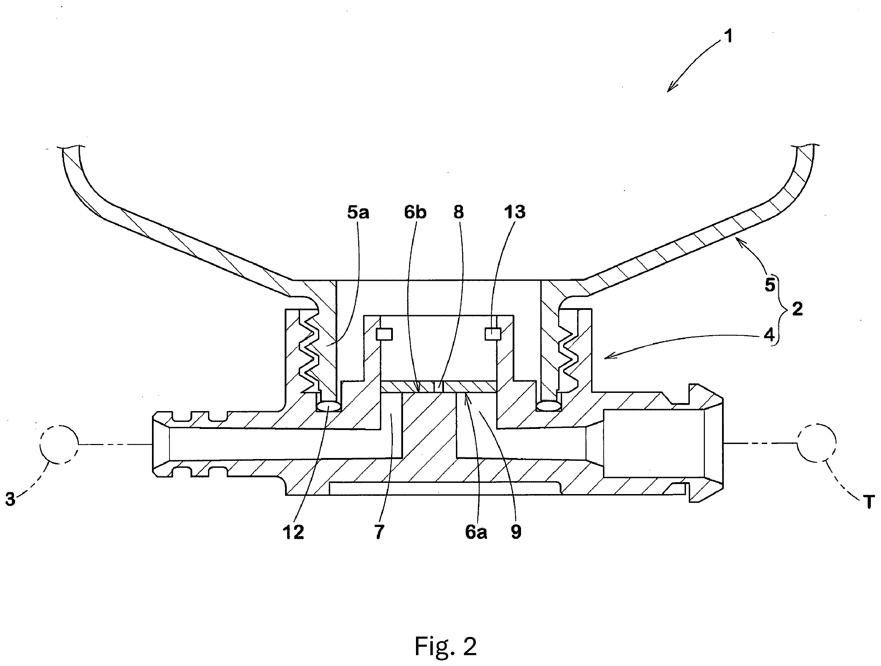

FIG. 2 is a cross-sectional view of the puncture repair kit 1 in FIG. 1 when the supply of the compressed air A is stopped. It is preferable that, as shown in FIG. 1 and FIG. 2, the upper member 10 moves toward the bottom surface 6b due to the stop of the supply of the compressed air A to close the communication between the second inlet 8, and the first inlet 7 and the outlet 9. The upper member 10 of the present embodiment moves toward the bottom surface 6b due to the stop of the supply of the compressed air A to come into contact with at least a part of the bottom surface 6b, thereby closing the second inlet 8.

Due to the stop of the supply of the compressed air A, since the second inlet 8 is closed, such an upper member 10 can suppress backflow of the puncture repair liquid R remaining in the container 5 to the first inlet 7 side even when the pressure in the first inlet 7 is reduced. In addition, since the second inlet 8 is closed, the upper member 10 can suppress spout of the puncture repair liquid R remaining in the container 5 from the outlet 9 side even when the pressure in the outlet 9 is reduced due to disconnection from the object T when the supply of the compressed air A is stopped. Therefore, the mixing device 4 of the present embodiment can suppress backflow and spout of the puncture repair liquid R even when the supply of the compressed air A is stopped.

In a more preferable mode, the container 5 has a mouth portion 5a for containing the puncture repair liquid R inside the container 5. The mixing device 4 of the present embodiment is attached to the mouth portion 5a of the container 5. It is preferable that the space between the mixing device 4 and the mouth portion 5a is sealed by a sealing member 12. Such a container 5 eliminates the need to form a separate outlet for the puncture repair liquid R and serves to reduce the production cost.

The mixing device 4 preferably includes a protrusion portion 13 which defines the position of the upper member 10 when the upper member 10 moves upward due to the supply of the compressed air A. The protrusion portion 13 of the present embodiment is formed as a separate member different from the lower member 11, and is attached to the lower member 11. The protrusion portion 13 may be provided continuously in the circumferential direction or partially in the circumferential direction, for example.

Such a protrusion portion 13 can be assembled after the upper member 10 and the lower member 11 are combined, is easy to produce, and can assuredly suppress falling off of the upper member 10. The protrusion portion 13 may, for example, be integrally formed with the lower member 11. In this case, it is preferable that the upper member 10 and the lower member 11 are combined by elastically deforming at least one of the upper member 10 and the lower member 11.

The lower member 11 of the present embodiment defines a side surface 6c which connects the top surface 6a and the bottom surface 6b of the space. The mixing chamber 6 has, for example, a circular column shape in which the top surface 6a and the bottom surface 6b are circular. Accordingly, the side surface 6c of the mixing chamber 6 has a cylindrical shape. Such a mixing chamber 6 has no corners in the side surface 6c and is suitable for reducing the amount of residual matter in the mixing chamber 6.

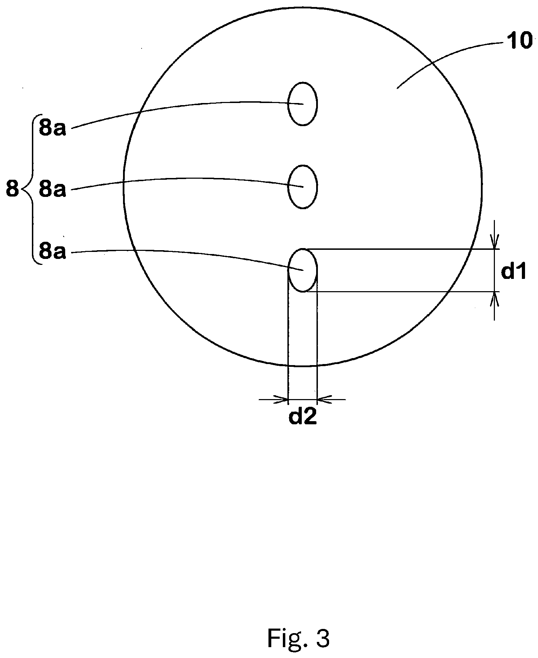

FIG. 3 is a plan view of the upper member 10. As shown in FIG. 3, the upper member 10 which defines the top surface 6a of the space of the present embodiment is a plate-like member having the top surface 6a as one surface. The upper member 10 preferably has a disc shape. Such an upper member 10 is easy to process and serves to reduce the production cost.

The upper member 10 is formed, for example, from a rubber member. Such an upper member 10 can absorb impacts during movement, and also serves to suppress unnecessary movement caused by pulsation of the compressor 3, due to the frictional force between the mixing chamber 6 and the side surface 6c.

The second inlet 8 includes at least one through hole 8a, in the present embodiment, three through holes 8a. Each of the three through holes 8a of the present embodiment has an elliptical shape having a long diameter d1 and a short diameter d2 in a plan view. The three through holes 8a are aligned, for example, in the direction of the long diameter d1. The long diameter d1 of each through hole 8a is preferably 1.1 to 2.5 times the short diameter d2 thereof.

Such a second inlet 8 allows the puncture repair liquid R to be efficiently dripped into the mixing chamber 6 by a differential pressure caused by pulsation of the compressor 3. The second inlet 8 is not limited to such a mode, and may have a circular shape or a slit shape, for example. The number of through holes 8a included in the second inlet 8 may be changed as appropriate as long as this number is one or more.

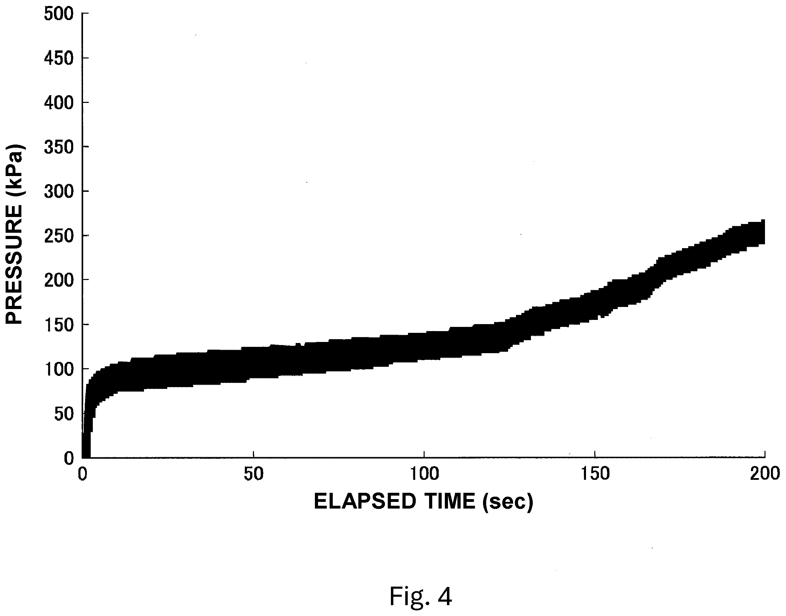

FIG. 4 is a graph showing an example of the pressure in the mixing chamber 6 when the compressed air A is supplied. In FIG. 4, the horizontal axis indicates time (s) from the start of supply of the compressed air A, and the vertical axis indicates the pressure (kPa) in the mixing chamber 6. As shown in FIG. 4, for example, the pressure in the mixing chamber 6 is 50 kPa or more as an initial pressure immediately after the start of supply of the compressed air A, and increases slightly as a whole while generating a certain range of a differential pressure by repeating a positive pressure state and a negative pressure state due to pulsation of the compressor 3.

The puncture repair liquid R is supplied from the second inlet 8 to the mixing chamber 6 of the present embodiment by the differential pressure caused by the pulsation of the compressor 3. The differential pressure caused by the pulsation of the compressor 3 is preferably 20 kPa or more. Such a mixing device 4 is suitable for efficiently dripping the puncture repair liquid R into the mixing chamber 6.

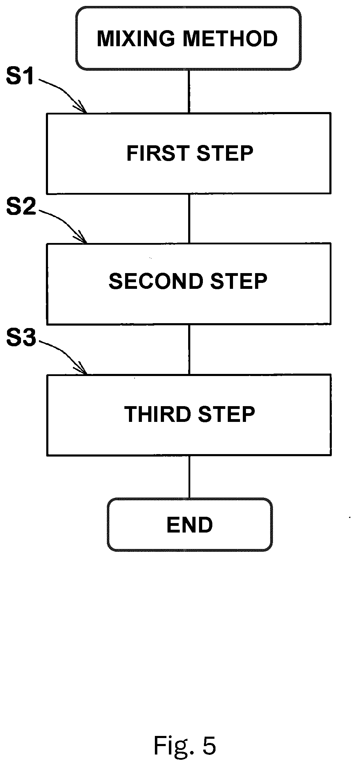

Next, a mixing method for mixing the puncture repair liquid R and the compressed air A using the mixing device 4 of the present embodiment will be described with reference to FIG. 1 to FIG. 4. FIG. 5 is a flowchart of the mixing method of the present embodiment.

As shown in FIG. 5, the mixing method of the present embodiment includes a first step S1 of moving the upper member 10 in the direction away from the bottom surface 6b by the supply of the compressed air A to form the mixing chamber 6. It is preferable that in the first step S1, the upper member 10 is moved in the direction away from the bottom surface 6b by the initial pressure to form the mixing chamber 6.

The mixing method of the present embodiment includes a second step S2 of mixing the puncture repair liquid R and the compressed air A in the mixing chamber 6 and discharging the mixture thereof from the outlet 9. It is preferable that in the second step S2, the puncture repair liquid R is supplied from the second inlet 8 by the differential pressure caused by the pulsation of the compressor 3.

It is preferable that in the first step S1, the upper member 10 smoothly moves in the direction away from the bottom surface 6b due to the initial pressure to open the second inlet 8, and in the second step S2, the upper member 10 drips the puncture repair liquid R into the mixing chamber 6 through the second inlet 8 without moving under the differential pressure caused by the pulsation. Such an upper member 10 can suppress pressure loss due to movement of the upper member 10 and efficiently drip the puncture repair liquid R into the mixing chamber 6.

The mixing method of the present embodiment includes a third step S3 of moving the upper member 10 toward the bottom surface 6b by the stop of the supply of the compressed air A. In such a third step S3, since the second inlet 8 is closed by the stop of the supply of the compressed air A, backflow of the puncture repair liquid R remaining in the container 5 to the first inlet 7 side can be suppressed even when the pressure in the first inlet 7 is reduced.

In addition, in the third step S3, since the second inlet 8 is closed, spout of the puncture repair liquid R remaining in the container 5 from the outlet 9 side can be suppressed even when the pressure in the outlet 9 is reduced due to disconnection from the object T when the supply of the compressed air A is stopped. Therefore, the mixing method of the present embodiment can suppress backflow and spout of the puncture repair liquid R even when the supply of the compressed air A is stopped.

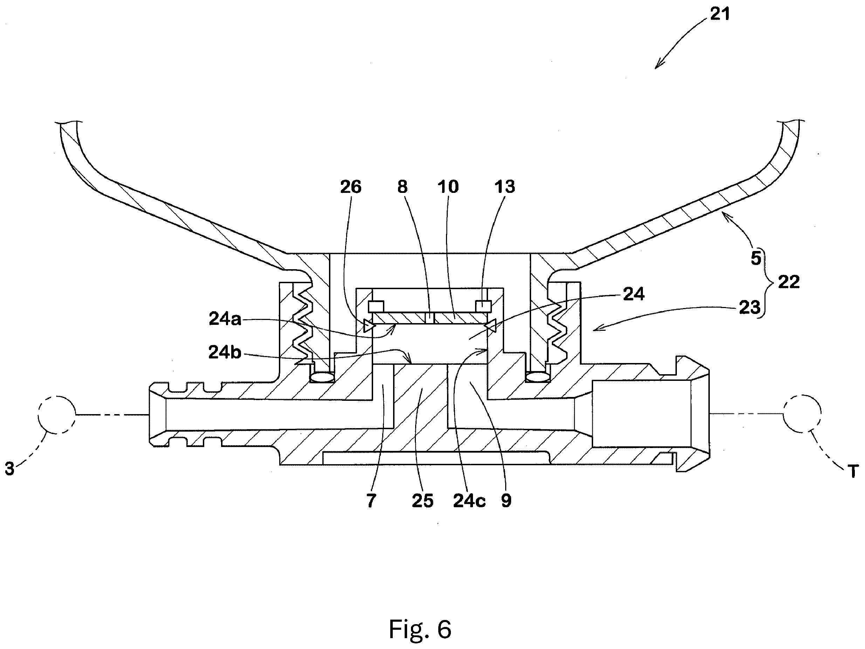

FIG. 6 is a cross-sectional view of a puncture repair kit 21 of a second embodiment. The same components as those in the above-described embodiment are designated by the same reference characters, and the description thereof is omitted. Similar to the above-described puncture repair kit 1, as shown in FIG. 6, the puncture repair kit 21 of the second embodiment includes a bottle unit 22 for supplying a mixture of a puncture repair liquid R and compressed air A, and a compressor 3 for supplying the compressed air A.

Similar to the above-described bottle unit 2, the bottle unit 22 of the second embodiment includes a mixing device 23 for mixing the puncture repair liquid R and the compressed air A, and a container 5 for containing the puncture repair liquid R. Similar to the above-described mixing device 4, the mixing device 23 of the second embodiment includes a mixing chamber 24 which defines a space for mixing the puncture repair liquid R and the compressed air A, a first inlet 7, a second inlet 8, and an outlet 9.

The mixing chamber 24 of the second embodiment includes an upper member 10 which defines a top surface 24a of the space, and a lower member 25 which defines a bottom surface 24b of the space, in a state of use. The lower member 25 defines, for example, a side surface 24c which connects the top surface 24a and the bottom surface 24b of the space. It is preferable that the second inlet 8 is formed in the upper member 10, and the first inlet 7 and the outlet 9 are formed in the lower member 25.

The upper member 10 of the second embodiment moves in a direction away from the bottom surface 24b due to the supply of the compressed air A to open the second inlet 8. The upper member 10 of the second embodiment moves toward the bottom surface 24b due to stop of the supply of the compressed air A to come into contact with at least a part of the bottom surface 24b, thereby closing the second inlet 8. Such a mixing device 23 can suppress backflow and spout of the puncture repair liquid R even when the supply of the compressed air A is stopped.

The mixing device 23 of the second embodiment includes a protrusion portion 13 which defines the position of the upper member 10 when the upper member 10 moves upward, and a holding portion 26 for blocking movement of the upper member 10 in a range of a differential pressure. The holding portion 26 is attached to the side surface 24c of the space, for example. The holding portion 26 is preferably a resistive member protruding radially inward from the side surface 24c.

Such a mixing device 23 can stably hold the upper member 10 by holding the upper member 10 between the protrusion portion 13 and the holding portion 26, thereby more assuredly blocking movement of the upper member 10 in the range of the differential pressure due to pulsation of the compressor 3.

It is preferable that the amount by which the holding portion 26 protrudes from the side surface 24c is sufficient to provide a resistance force that enables the upper member 10 to move, due to the initial pressure at the start of supply of the compressed air A or the pressure variation when the supply of the compressed air A is stopped. Such a holding portion 26 allows the upper member 10 to smoothly move due to the initial pressure at the start of supply of the compressed air A or the pressure variation when the supply of the compressed air A is stopped. The holding portion 26 may, for example, be integrally formed with the lower member 25.

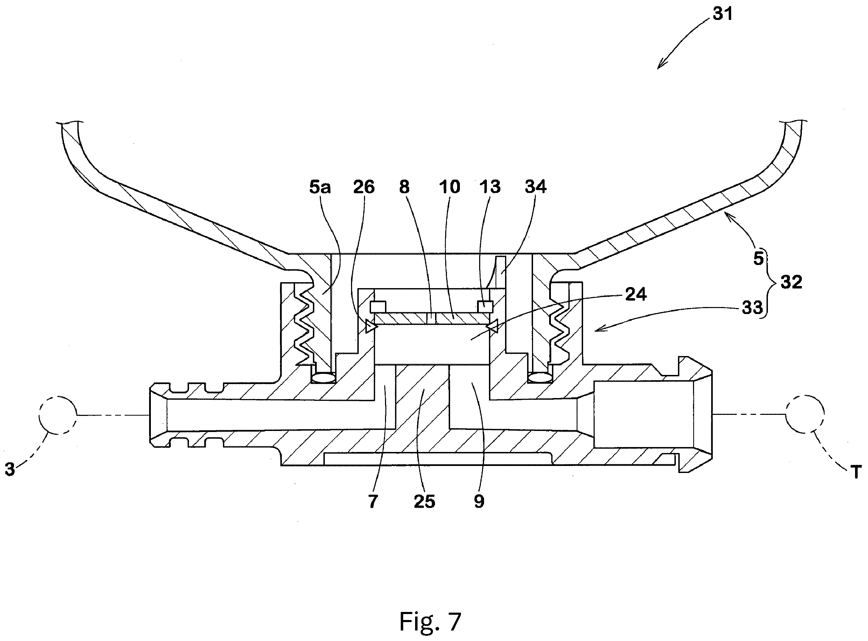

FIG. 7 is a cross-sectional view of a puncture repair kit 31 of a third embodiment. The same components as those in the above-described embodiments are designated by the same reference characters, and the description thereof is omitted. Similar to the above-described puncture repair kit 1, as shown in FIG. 7, the puncture repair kit 31 of the third embodiment includes a bottle unit 32 for supplying a mixture of a puncture repair liquid R and compressed air A, and a compressor 3 for supplying the compressed air A.

Similar to the above-described bottle unit 2, the bottle unit 32 of the third embodiment includes a mixing device 33 for mixing the puncture repair liquid R and the compressed air A, and a container 5 for containing the puncture repair liquid R. Similar to the above-described mixing device 23, the mixing device 33 of the third embodiment includes a mixing chamber 24 which defines a space for mixing the puncture repair liquid R and the compressed air A, a first inlet 7, a second inlet 8, and an outlet 9.

The mixing chamber 24 preferably includes an upper member 10 in which the second inlet 8 is formed, and a lower member 25 in which the first inlet 7 and the outlet 9 are formed. Similar to the above-described mixing device 23, the mixing device 33 preferably includes, for example, a protrusion portion 13 which defines the position of the upper member 10 when the upper member 10 moves upward, and a holding portion 26 for blocking movement of the upper member 10 in a range of a differential pressure. Such a mixing device 33 can suppress backflow and spout of the puncture repair liquid R even when the supply of the compressed air A is stopped, and can also block movement of the upper member 10 in the range of the differential pressure due to pulsation of the compressor 3.

The mixing device 33 of the third embodiment includes a breaking portion 34 for breaking a film (not shown) attached to the mouth portion 5a of the container 5. The film is, for example, attached to the mouth portion 5a in order to hold the contained puncture repair liquid R in an airtight manner. Such a breaking portion 34 can break the film on the mouth portion 5a when the mixing device 33 is attached to the container 5, thereby allowing the supply of the puncture repair liquid R to start smoothly.

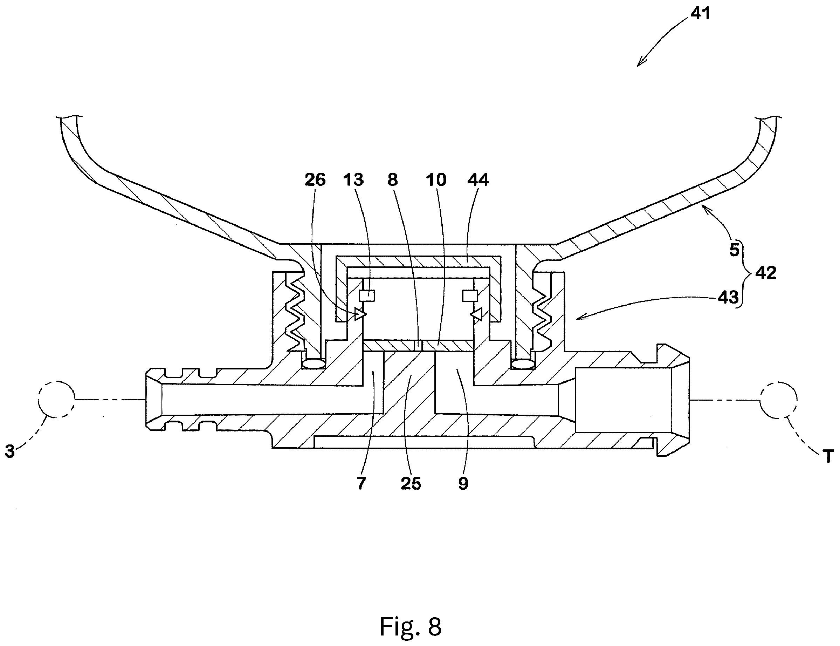

FIG. 8 is a cross-sectional view of a puncture repair kit 41 of a fourth embodiment before supply of compressed air A starts. The same components as those in the above-described embodiments are designated by the same reference characters, and the description thereof is omitted. Similar to the above-described puncture repair kit 1, as shown in FIG. 8, the puncture repair kit 41 of the fourth embodiment includes a bottle unit 42 for supplying a mixture of a puncture repair liquid R and the compressed air A, and a compressor 3 for supplying the compressed air A.

Similar to the above-described bottle unit 2, the bottle unit 42 of the fourth embodiment includes a mixing device 43 for mixing the puncture repair liquid R and the compressed air A, and a container 5 for containing the puncture repair liquid R. Similar to the above-described mixing device 23, the mixing device 43 of the fourth embodiment includes an upper member 10 and a lower member 25 for defining the space of the mixing chamber 24 (shown in FIG. 6), a first inlet 7 and an outlet 9 formed in the lower member 25, and a second inlet 8 formed in the upper member 10.

Similar to the above-described mixing device 23, the mixing device 43 preferably includes, for example, a protrusion portion 13 which defines the position of the upper member 10 when the upper member 10 moves upward, and a holding portion 26 for blocking movement of the upper member 10 in a range of a differential pressure. Such a mixing device 43 can suppress backflow and spout of the puncture repair liquid R even when the supply of the compressed air A is stopped, and can also block movement of the upper member 10 in the range of the differential pressure due to pulsation of the compressor 3.

The mixing device 43 of the fourth embodiment includes a cap 44 which prevents leakage of the puncture repair liquid R before the compressed air A is supplied after the mixing device 43 is attached to the mouth portion 5a of the container 5. The cap 44 is, for example, blown into the container 5 by the initial pressure at the start of supply of the compressed air A, thereby allowing the puncture repair liquid R to be dripped from the second inlet 8.

Such a mixing device 43 can assuredly suppress leakage of the puncture repair liquid R before the compressed air A is supplied. Therefore, the bottle unit 42 of the fourth embodiment can be stored in a state where the mixing device 43 and the container 5 are assembled.

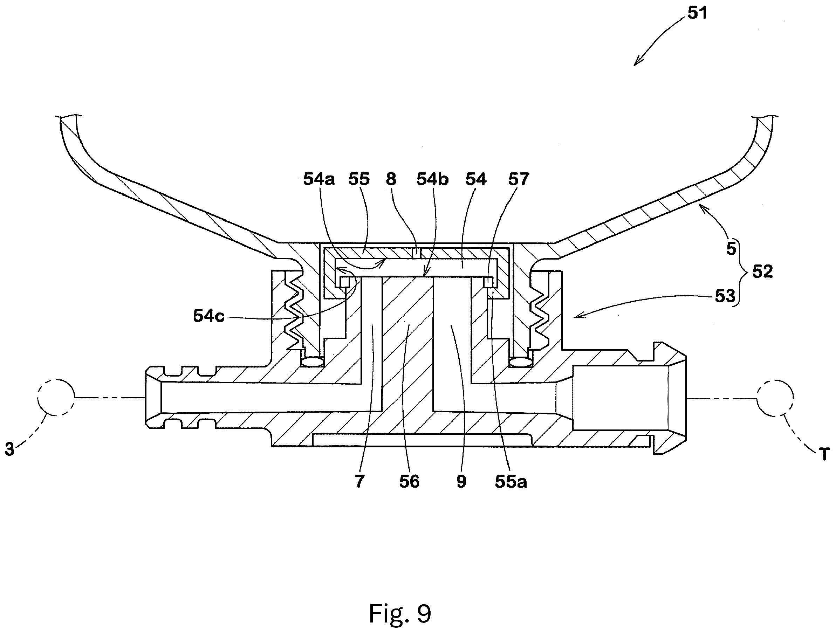

FIG. 9 is a cross-sectional view of a puncture repair kit 51 of a fifth embodiment. The same components as those in the above-described embodiments are designated by the same reference characters, and the description thereof is omitted. Similar to the above-described puncture repair kit 1, as shown in FIG. 9, the puncture repair kit 51 of the fifth embodiment includes a bottle unit 52 for supplying a mixture of a puncture repair liquid R and compressed air A, and a compressor 3 for supplying the compressed air A.

Similar to the above-described bottle unit 2, the bottle unit 52 of the fifth embodiment includes a mixing device 53 for mixing the puncture repair liquid R and the compressed air A, and a container 5 for containing the puncture repair liquid R. The mixing device 53 of the fifth embodiment includes a mixing chamber 54 which defines a space for mixing the puncture repair liquid R and the compressed air A, a first inlet 7, a second inlet 8, and an outlet 9.

The mixing chamber 54 of the fifth embodiment includes an upper member 55 which defines a top surface 54a of the space, and a lower member 56 which defines a bottom surface 54b of the space, in a state of use. The upper member 55 of the fifth embodiment defines a side surface 54c which connects the top surface 54a and the bottom surface 54b of the space. It is preferable that the second inlet 8 is formed in the upper member 55, and the first inlet 7 and the outlet 9 are formed in the lower member 56.

The upper member 55 of the fifth embodiment is a bottomed cylindrical member having the top surface 54a and the side surface 54c as inner surfaces. Similar to the above-described upper member 10, the upper member 55 of the fifth embodiment moves in a direction away from the bottom surface 54b due to the supply of the compressed air A to open the second inlet 8. The size of such a mixing chamber 54 can be changed by replacing the upper member 55.

The mixing device 53 preferably includes a protrusion portion 57 which defines the position of the upper member 55 when the upper member 55 moves upward due to the supply of the compressed air A. The protrusion portion 57 of the fifth embodiment defines the position of the upper member 55 when the upper member 55 moves upward, by engaging an engagement portion 55a of the upper member 55. Although not shown, the mixing device 53 may include, for example, a resistive member protruding radially outward from the lower member 56.

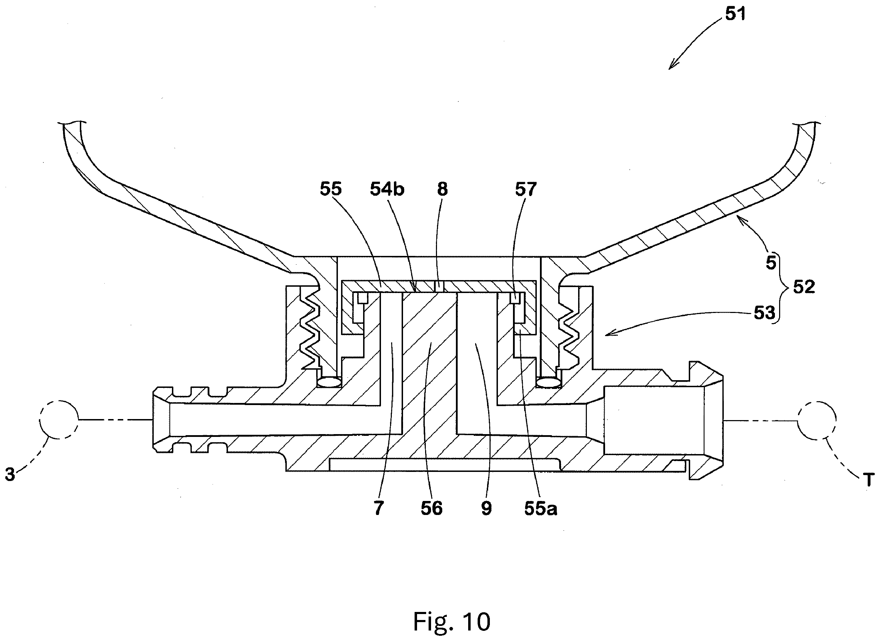

FIG. 10 is a cross-sectional view of the puncture repair kit 51 in FIG. 9 when the supply of the compressed air A is stopped. Similar to the above-described upper member 10, as shown in FIG. 9 and FIG. 10, the upper member 55 of the fifth embodiment moves toward the bottom surface 54b due to the stop of the supply of the compressed air A to come into contact with at least a part of the bottom surface 54b, thereby closing the second inlet 8.

Due to the stop of the supply of the compressed air A, since the second inlet 8 is closed, such an upper member 55 can suppress backflow of the puncture repair liquid R remaining in the container 5 to the first inlet 7 side even when the pressure in the first inlet 7 is reduced. In addition, since the second inlet 8 is closed, the upper member 55 can suppress spout of the puncture repair liquid R remaining in the container 5 from the outlet 9 side even when the pressure in the outlet 9 is reduced due to disconnection from the object T when the supply of the compressed air A is stopped. Therefore, the mixing device 53 of the fifth embodiment can suppress backflow and spout of the puncture repair liquid R even when the supply of the compressed air A is stopped.

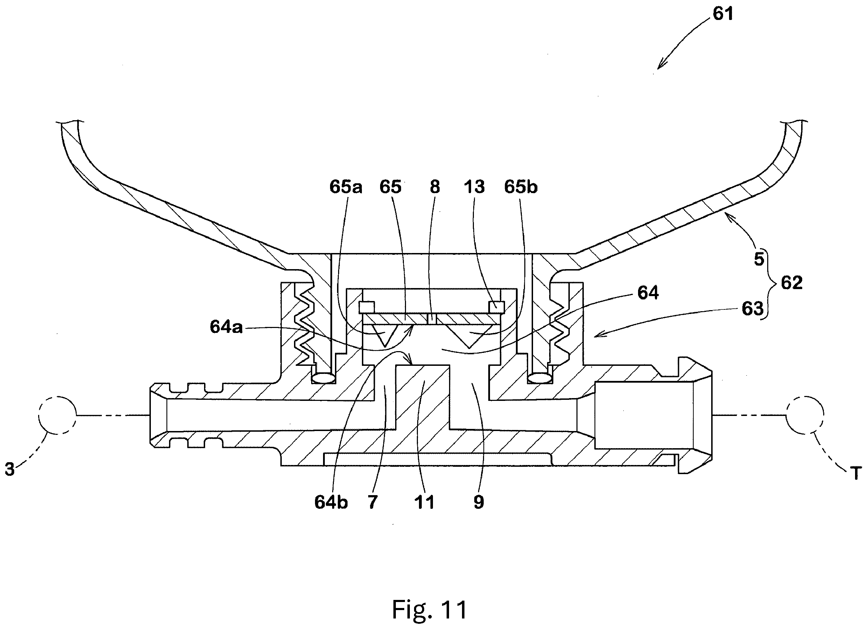

FIG. 11 is a cross-sectional view of a puncture repair kit 61 of a sixth embodiment. The same components as those in the above-described embodiments are designated by the same reference characters, and the description thereof is omitted. Similar to the above-described puncture repair kit 1, as shown in FIG. 11, the puncture repair kit 61 of the sixth embodiment includes a bottle unit 62 for supplying a mixture of a puncture repair liquid R and compressed air A, and a compressor 3 for supplying the compressed air A.

Similar to the above-described bottle unit 2, the bottle unit 62 of the sixth embodiment includes a mixing device 63 for mixing the puncture repair liquid R and the compressed air A, and a container 5 for containing the puncture repair liquid R. The mixing device 63 of the sixth embodiment includes a mixing chamber 64 which defines a space for mixing the puncture repair liquid R and the compressed air A, a first inlet 7, a second inlet 8, and an outlet 9.

The mixing chamber 64 of the sixth embodiment includes an upper member 65 which defines a top surface 64a of the space, and a lower member 11 which defines a bottom surface 64b of the space, in a state of use. It is preferable that the second inlet 8 is formed in the upper member 65, and the first inlet 7 and the outlet 9 are formed in the lower member 11.

The upper member 65 of the sixth embodiment moves in a direction away from the bottom surface 64b due to the supply of the compressed air A to provide communication between the mixing chamber 64, and the first inlet 7 and the outlet 9. The mixing chamber 64 of the sixth embodiment is formed as a result of the movement of the upper member 65 due to the supply of the compressed air A. Such a mixing chamber 64 can be repeatedly brought into a positive pressure state and a negative pressure state by pulsation of the compressed air A supplied from the compressor 3, thereby dripping the puncture repair liquid R from the second inlet 8 into the mixing chamber 64 to produce a mixture.

The mixing device 63 preferably includes a protrusion portion 13 which defines the position of the upper member 65 when the upper member 65 moves upward due to the supply of the compressed air A. The mixing device 63 may include, for example, the holding portion 26 (shown in FIG. 6) which is a resistive member protruding radially inward from the lower member 11.

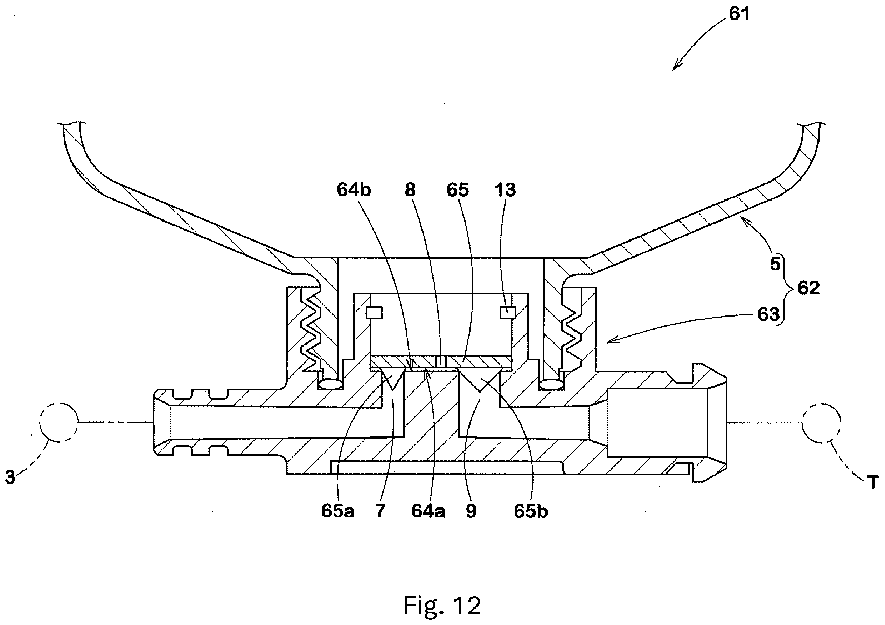

FIG. 12 is a cross-sectional view of the puncture repair kit 61 in FIG. 11 when the supply of the compressed air A is stopped. As shown in FIG. 11 and FIG. 12, the upper member 65 of the sixth embodiment moves toward the bottom surface 64b due to the stop of the supply of the compressed air A to close the communication between the mixing chamber 64, and the first inlet 7 and the outlet 9.

Due to the stop of the supply of the compressed air A, since the first inlet 7 is closed, such an upper member 65 can suppress backflow of the puncture repair liquid R remaining in the container 5 to the first inlet 7 side even when the pressure in the first inlet 7 is reduced. In addition, since the outlet 9 is closed, the upper member 65 can suppress spout of the puncture repair liquid R remaining in the container 5 from the outlet 9 side even when the pressure in the outlet 9 is reduced due to disconnection from the object T when the supply of the compressed air A is stopped. Therefore, the mixing device 63 of the sixth embodiment can suppress backflow and spout of the puncture repair liquid R even when the supply of the compressed air A is stopped.

The upper member 65 of the sixth embodiment has a first closing portion 65a which can close the communication between the mixing chamber 64 and the first inlet 7, and a second closing portion 65b which can close the communication between the mixing chamber 64 and the outlet 9. Such an upper member 65 can assuredly close the communication between the mixing chamber 64, and the first inlet 7 and the outlet 9 even if there is a gap between the second inlet 8 and the bottom surface 64b, that is, even if the top surface 64a and the bottom surface 64b are separated from each other when the supply of the compressed air A is stopped.

Similar to the above-described upper member 10, the upper member 65 which defines the top surface 64a of the space is, for example, a plate-like member having the top surface 64a as one surface. The upper member 65 is not limited to such a mode, and, similar to the above-described upper member 55, may be a bottomed cylindrical member, for example.

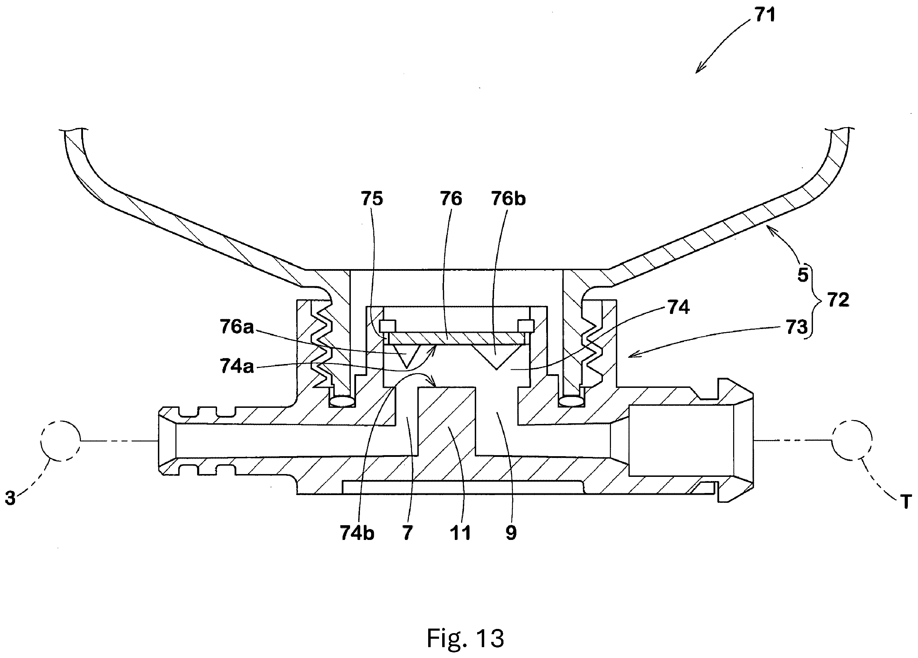

FIG. 13 is a cross-sectional view of a puncture repair kit 71 of a seventh embodiment. The same components as those in the above-described embodiments are designated by the same reference characters, and the description thereof is omitted. Similar to the above-described puncture repair kit 1, as shown in FIG. 13, the puncture repair kit 71 of the seventh embodiment includes a bottle unit 72 for supplying a mixture of a puncture repair liquid R and compressed air A, and a compressor 3 for supplying the compressed air A.

Similar to the above-described bottle unit 2, the bottle unit 72 of the seventh embodiment includes a mixing device 73 for mixing the puncture repair liquid R and the compressed air A, and a container 5 for containing the puncture repair liquid R.

Similar to the above-described mixing device 4, the mixing device 73 of the seventh embodiment includes a mixing chamber 74 which defines a space for mixing the puncture repair liquid R and the compressed air A. The mixing device 73 preferably includes a first inlet 7 for supplying the compressed air A to the mixing chamber 74, and a second inlet 75 for supplying the puncture repair liquid R to the mixing chamber 74. Similar to the above-described mixing device 4, the mixing device 73 of the seventh embodiment includes an outlet 9 for discharging the mixture of the puncture repair liquid R and the compressed air A from the mixing chamber 74.

The mixing chamber 74 of the seventh embodiment includes an upper member 76 which defines a top surface 74a of the space, and a lower member 11 which defines a bottom surface 74b of the space, in a state of use. It is preferable that the second inlet 75 is formed in the upper member 76, and the first inlet 7 and the outlet 9 are formed in the lower member 11.

Similar to the above-described upper member 65, the upper member 76 of the seventh embodiment has object a first closing portion 76a which can close the communication between the mixing chamber 74 and the first inlet 7, and a second closing portion 76b which can close the communication between the mixing chamber 74 and the outlet 9. Such an upper member 76 can assuredly close the communication between the mixing chamber 74, and the first inlet 7 and the outlet 9 even if there is a gap between the second inlet 8 and the bottom surface 74b, that is, even if the top surface 74a and the bottom surface 74b are separated from each other when the supply of the compressed air A is stopped.

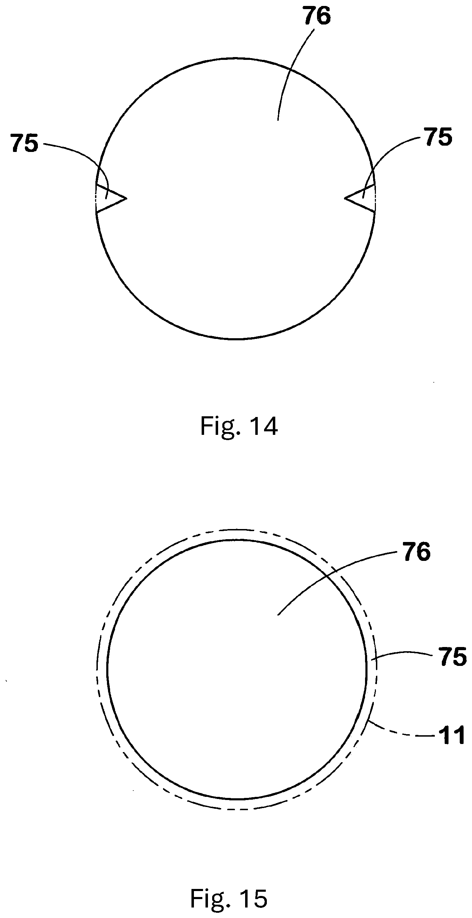

FIG. 14 is a plan view of the upper member 76 of the seventh embodiment. As shown in FIG. 14, the upper member 76 has at least one second inlet 75, in the seventh embodiment, two second inlets 75, formed in a peripheral portion thereof. Such an upper member 76 allows the puncture repair liquid R to be dripped from the periphery of the mixing chamber 74, and serves to agitate the compressed air A and the puncture repair liquid R in the mixing chamber 74 to efficiently produce a mixture.

FIG. 15 is a plan view of an upper member 76 of another embodiment. As shown in FIG. 15, the upper member 76 may have, for example, a second inlet 75 formed over the entire circumference of a peripheral portion thereof. The second inlet 75 of this embodiment is formed in the form of a slit between the lower member 11 and the upper member 76. In this case, it is preferable that the upper member 76 is supported by at least three projecting structures for holding the position of the upper member 76. For example, a tapered structure can suitably act as each of the projecting structures. Such an upper member 76 is suitable for supplying a large amount of the puncture repair liquid R.

Although the particularly preferred embodiments of the present invention have been described in detail above, the present invention is not limited to the above-described embodiments, and various modifications can be made to implement the present invention.

## Claims

1. A mixing device (4, 23, 33, 43, 53, 63, 73) comprising:
a mixing chamber (6, 24, 54, 64, 74) which defines a space for mixing a puncture repair liquid (R) and compressed air (A);
a first inlet (7) for supplying the compressed air (A) to the mixing chamber (6, 24, 54, 64, 74);
a second inlet (8, 75) for supplying the puncture repair liquid (R) to the mixing chamber (6, 24, 54, 64, 74); and
an outlet (9) for discharging a mixture of the puncture repair liquid (R) and the compressed air (A) from the mixing chamber (6, 24, 54, 64, 74), **characterized in that**
the mixing chamber (6, 24, 54, 64, 74) includes an upper member (10, 55, 65, 76) which defines a top surface (6a, 24a, 54a, 64a, 74a) of the space, and a lower member (11, 25, 56) which defines a bottom surface (6b, 24b, 54b, 64b, 74b) of the space, in a state of use,
the second inlet (8, 75) is formed in the upper member (10, 55, 65, 76), and
the upper member (10, 55, 65, 76) moves in a direction away from the bottom surface (6b, 24b, 54b, 64b, 74b) due to supply of the compressed air (A) to provide communication between the second inlet (8, 75), and the first inlet (7) and the outlet (9) via the mixing chamber (6, 24, 54, 64, 74), and moves toward the bottom surface (6b, 24b, 54b, 64b, 74b) due to stop of the supply of the compressed air (A) to close the communication between the second inlet (8, 75), and the first inlet (7) and the outlet (9).

2. The mixing device (4, 23, 33, 43, 53) according to claim 1, wherein the upper member (10, 55) moves in the direction away from the bottom surface (6b, 24b, 54b) due to the supply of the compressed air (A) to open the second inlet (8), and moves toward the bottom surface (6b, 24b, 54b) due to the stop of the supply of the compressed air (A) to come into contact with at least a part of the bottom surface (6b, 24b, 54b), thereby closing the second inlet (8).

3. The mixing device (63, 73) according to claim 1, wherein the upper member (65, 76) moves in the direction away from the bottom surface (64b, 74b) due to the supply of the compressed air (A) to provide communication between the mixing chamber (64, 74), and the first inlet (7) and the outlet (9), and moves toward the bottom surface (64b, 74b) due to the stop of the supply of the compressed air (A) to close the communication between the mixing chamber (64, 74), and the first inlet (7) and the outlet (9).

4. The mixing device (63, 73) according to claim 3, wherein the upper member (65, 76) has a first closing portion (65a, 76a) which can close the communication between the mixing chamber (64, 74) and the first inlet (7), and a second closing portion (65b, 76b) which can close the communication between the mixing chamber (64, 74) and the outlet (9).

5. The mixing device (4, 23, 33, 43, 63, 73) according to any one of claims 1 to 4, wherein the upper member (10, 65, 76) is a plate-like member having the top surface (6a, 24a, 64a, 74a) as one surface.

6. The mixing device (53) according to any one of claims 1 to 4, wherein
the mixing chamber (54) includes a side surface (54c) which connects the top surface (54a) and the bottom surface (54b), and
the upper member (55) is a bottomed cylindrical member having the top surface (54a) and the side surface (54c) as inner surfaces.

7. A mixing method for mixing the puncture repair liquid (R) and the compressed air (A) using the mixing device (4, 23, 33, 43, 53, 63, 73) according to any one of claims 1 to 6, the mixing method comprising:
a first step of moving the upper member (10, 55, 65, 76) in the direction away from the bottom surface (6b, 24b, 54b, 64b, 74b) by the supply of the compressed air (A) to form the mixing chamber (6, 24, 54, 64, 74);
a second step of mixing the puncture repair liquid (R) and the compressed air (A) in the mixing chamber (6, 24, 54, 64, 74) and discharging the mixture from the outlet (9); and
a third step of moving the upper member (10, 55, 65, 76) toward the bottom surface (6b, 24b, 54b, 64b, 74b) by the stop of the supply of the compressed air (A).

8. A bottle unit (2, 22, 32, 42, 52, 62, 72) comprising:
the mixing device (4, 23, 33, 43, 53, 63, 73) according to any one of claims 1 to 6; and
a container (5) for containing the puncture repair liquid (R), wherein
the container (5) has a mouth portion (5a) for containing the puncture repair liquid (R) inside the container (5), and
the mixing device (4, 23, 33, 43, 53, 63, 73) is attached to the mouth portion (5a).

9. A puncture repair kit (1, 21, 31, 41, 51, 61, 71) comprising:
the bottle unit (2, 22, 32, 42, 52, 62, 72) according to claim 8; and
a compressor (3) for supplying the compressed air (A).

10. The puncture repair kit (21, 31, 41, 61) according to claim 9, wherein
the puncture repair liquid (R) is supplied from the second inlet (8) to the mixing chamber (24, 64) by a differential pressure caused by pulsation of the compressor (3), and
the mixing device (23, 33, 43, 63) includes a holding portion (26) for blocking movement of the upper member (10, 65) in a range of the differential pressure.

## Patentansprüche

1. Mischvorrichtung (4, 23, 33, 43, 53, 63, 73), umfassend:
eine Mischkammer (6, 24, 54, 64, 74), die einen Raum zum Mischen einer Reifenpannenreparaturflüssigkeit (R) und Druckluft (A) definiert;
einen ersten Einlass (7) zum Zuführen der Druckluft (A) zu der Mischkammer (6, 24, 54, 64, 74);
einen zweiten Einlass (8, 75) zum Zuführen der Reifenpannenreparaturflüssigkeit (R) zu der Mischkammer (6, 24, 54, 64, 74); und
einen Auslass (9) zum Abführen einer Mischung aus der Reifenpannenreparaturflüssigkeit (R) und der Druckluft (A) aus der Mischkammer (6, 24, 54, 64, 74), **dadurch gekennzeichnet, dass**
die Mischkammer (6, 24, 54, 64, 74) ein oberes Element (10, 55, 65, 76), das eine Oberseite (6a, 24a, 54a, 64a, 74a) des Raums definiert, und ein unteres Element (11, 25, 56), das eine Unterseite (6b, 24b, 54b, 64b, 74b) des Raums definiert, in einem Gebrauchszustand einschließt,
der zweite Einlass (8, 75) in dem oberen Element (10, 55, 65, 76) gebildet ist, und
das obere Element (10, 55, 65, 76) sich aufgrund der Zufuhr von Druckluft (A) in eine Richtung weg von der Unterseite (6b, 24b, 54b, 64b, 74b) bewegt, um eine Verbindung zwischen dem zweiten Einlass (8, 75) und dem ersten Einlass (7) und dem Auslass (9) über die Mischkammer (6, 24, 54, 64, 74) bereitzustellen, und sich aufgrund des Anhaltens der Zufuhr von Druckluft (A) in Richtung der Unterseite (6b, 24b, 54b, 64b, 74b) bewegt, um die Verbindung zwischen dem zweiten Einlass (8, 75) und dem ersten Einlass (7) und dem Auslass (9) zu schließen.

2. Mischvorrichtung (4, 23, 33, 43, 53) nach Anspruch 1, wobei sich das obere Element (10, 55) in die Richtung weg von der Unterseite (6b, 24b, 54b) bewegt, aufgrund der Zufuhr von Druckluft (A), um den zweiten Einlass (8) zu öffnen, und sich in Richtung der Unterseite (6b, 24b, 54b) bewegt, aufgrund des Anhaltens der Zufuhr von Druckluft (A), um mit mindestens einem Teil der Unterseite (6b, 24b, 54b) in Kontakt zu kommen, wodurch der zweite Einlass (8) geschlossen wird.

3. Mischvorrichtung (63, 73) nach Anspruch 1, wobei sich das obere Element (65, 76) in die Richtung weg von der Unterseite (64b, 74b) bewegt, aufgrund der Zufuhr von Druckluft (A), um eine Verbindung zwischen der Mischkammer (64, 74) und dem ersten Einlass (7) und dem Auslass (9) bereitzustellen, und sich in Richtung der Unterseite (64b, 74b) bewegt, aufgrund des Anhaltens der Zufuhr von Druckluft (A), um die Verbindung zwischen der Mischkammer (64, 74) und dem ersten Einlass (7) und dem Auslass (9) zu schließen.

4. Mischvorrichtung (63, 73) nach Anspruch 3, wobei das obere Element (65, 76) einen ersten Verschlussabschnitt (65a, 76a), der die Verbindung zwischen der Mischkammer (64, 74) und dem ersten Einlass (7) verschließen kann, und einen zweiten Verschlussabschnitt (65b, 76b), der die Verbindung zwischen der Mischkammer (64, 74) und dem Auslass (9) verschließen kann, aufweist.

5. Mischvorrichtung (4, 23, 33, 43, 63, 73) nach einem der Ansprüche 1 bis 4, wobei das obere Element (10, 65, 76) ein plattenartiges Element ist, das die Oberseite (6a, 24a, 64a, 74a) als eine Oberfläche aufweist.

6. Mischvorrichtung (53) nach einem der Ansprüche 1 bis 4, wobei
die Mischkammer (54) eine Seitenfläche (54c) einschließt, welche die Oberseite (54a) und die Unterseite (54b) verbindet, und
das obere Element (55) ein zylindrisches Element mit Boden ist, das die Oberseite (54a) und die Seitenfläche (54c) als Innenflächen aufweist.

7. Mischverfahren zum Mischen der Reifenpannenreparaturflüssigkeit (R) und der Druckluft (A) unter Verwendung der Mischvorrichtung (4, 23, 33, 43, 53, 63, 73) nach einem der Ansprüche 1 bis 6, wobei das Mischverfahren umfasst:
einen ersten Schritt des Bewegens des oberen Elements (10, 55, 65, 76) in die Richtung weg von der Unterseite (6b, 24b, 54b, 64b, 74b) durch das Zuführen von Druckluft (A), um die Mischkammer (6, 24, 54, 64, 74) zu bilden;
einen zweiten Schritt des Mischens der Reifenpannenreparaturflüssigkeit (R) und der Druckluft (A) in der Mischkammer (6, 24, 54, 64, 74) und des Abführens des Gemisches aus dem Auslass (9); und
einen dritten Schritt des Bewegens des oberen Elements (10, 55, 65, 76) in Richtung der Unterseite (6b, 24b, 54b, 64b, 74b) durch das Anhalten der Zufuhr von Druckluft (A).

8. Flascheneinheit (2, 22, 32, 42, 52, 62, 72), umfassend:
die Mischvorrichtung (4, 23, 33, 43, 53, 63, 73) nach einem der Ansprüche 1 bis 6; und
einen Behälter (5) zum Aufnehmen der Reifenpannenreparaturflüssigkeit (R), wobei
der Behälter (5) einen Öffnungsabschnitt (5a) zum Aufnehmen der Reifenpannenreparaturflüssigkeit (R) im Inneren des Behälters (5) aufweist, und
die Mischvorrichtung (4, 23, 33, 43, 53, 63, 73) an dem Öffnungsabschnitt (5a) angebracht ist.

9. Reifenpannenreparaturset (1, 21, 31, 41, 51, 61, 71) umfassend:
die Flascheneinheit (2, 22, 32, 42, 52, 62, 72) nach Anspruch 8; und
einen Kompressor (3) zum Zuführen von Druckluft (A).

10. Reifenpannenreparaturset (21, 31, 41, 61) nach Anspruch 9, wobei
die Reifenpannenreparaturflüssigkeit (R) vom zweiten Einlass (8) zur Mischkammer (24, 64) durch einen Differenzdruck zugeführt wird, der durch Pulsieren des Kompressors (3) verursacht wird, und
die Mischvorrichtung (23, 33, 43, 63) einen Halteabschnitt (26) zum Blockieren der Bewegung des oberen Elements (10, 65) in einem Bereich des Differenzdrucks einschließt.

## Revendications

1. Dispositif de mélange (4, 23, 33, 43, 53, 63, 73) comprenant :
une chambre de mélange (6, 24, 54, 64, 74) qui définit un espace permettant de mélanger un liquide de réparation de crevaison (R) et de l'air comprimé (A) ;
une première entrée (7) permettant d'alimenter la chambre de mélange (6, 24, 54, 64, 74) en air comprimé (A) ;
une seconde entrée (8, 75) permettant d'alimenter la chambre de mélange (6, 24, 54, 64, 74) en liquide de réparation de crevaison (R) ; et
une sortie (9) permettant d'évacuer un mélange du liquide de réparation de crevaison (R) et de l'air comprimé (A) provenant de la chambre de mélange (6, 24, 54, 64, 74), **caractérisé en ce que**
la chambre de mélange (6, 24, 54, 64, 74) comporte un élément supérieur (10, 55, 65, 76) qui définit une surface supérieure (6a, 24a, 54a, 64a, 74a) de l'espace, et un élément inférieur (11, 25, 56) qui définit une surface inférieure (6b, 24b, 54b, 64b, 74b) de l'espace, dans un état d'utilisation,
la seconde entrée (8, 75) est formée dans l'élément supérieur (10, 55, 65, 76), et
l'élément supérieur (10, 55, 65, 76) se déplace dans une direction à l'écart de la surface inférieure (6b, 24b, 54b, 64b, 74b) en raison de l'alimentation en air comprimé (A) pour fournir une communication entre la seconde entrée (8, 75), et la première entrée (7) et la sortie (9) par l'intermédiaire de la chambre de mélange (6, 24, 54, 64, 74), et se déplace vers la surface inférieure (6b, 24b, 54b, 64b, 74b) en raison de l'arrêt de l'alimentation en air comprimé (A) pour fermer la communication entre la seconde entrée (8, 75), et la première entrée (7) et la sortie (9).

2. Dispositif de mélange (4, 23, 33, 43, 53) selon la revendication 1, dans lequel l'élément supérieur (10, 55) se déplace dans la direction à l'écart de la surface inférieure (6b, 24b, 54b) en raison de l'alimentation en air comprimé (A) pour ouvrir la seconde entrée (8), et se déplace vers la surface inférieure (6b, 24b, 54b) en raison de l'arrêt de l'alimentation en air comprimé (A) pour entrer en contact avec au moins une partie de la surface inférieure (6b, 24b, 54b), fermant de ce fait la seconde entrée (8).

3. Dispositif de mélange (63, 73) selon la revendication 1, dans lequel l'élément supérieur (65, 76) se déplace dans la direction à l'écart de la surface inférieure (64b, 74b) en raison de l'alimentation en air comprimé (A) pour fournir une communication entre la chambre de mélange (64, 74), et la première entrée (7) et la sortie (9), et se déplace en direction de la surface inférieure (64b, 74b) en raison de l'arrêt de l'alimentation en air comprimé (A) pour fermer la communication entre la chambre de mélange (64, 74), et la première entrée (7) et la sortie (9).

4. Dispositif de mélange (63, 73) selon la revendication 3, dans lequel l'élément supérieur (65, 76) a une première partie de fermeture (65a, 76a) qui peut fermer la communication entre la chambre de mélange (64, 74) et la première entrée (7), et une seconde partie de fermeture (65b, 76b) qui peut fermer la communication entre la chambre de mélange (64, 74) et la sortie (9).

5. Dispositif de mélange (4, 23, 33, 43, 63, 73) selon l'une quelconque des revendications 1 à 4, dans lequel l'élément supérieur (10, 65, 76) est un élément en forme de plaque ayant la surface supérieure (6a, 24a, 64a, 74a) comme une seule surface.

6. Dispositif de mélange (53) selon l'une quelconque des revendications 1 à 4, dans lequel
la chambre de mélange (54) comporte une surface latérale (54c) qui relie la surface supérieure (54a) et la surface inférieure (54b), et
l'élément supérieur (55) est un élément cylindrique inférieur ayant la surface supérieure (54a) et la surface latérale (54c) comme surfaces intérieures.

7. Procédé de mélange permettant de mélanger le liquide de réparation de crevaison (R) et l'air comprimé (A) à l'aide du dispositif de mélange (4, 23, 33, 43, 53, 63, 73) selon l'une quelconque des revendications 1 à 6, le procédé de mélange comprenant :
une première étape consistant à déplacer l'élément supérieur (10, 55, 65, 76) dans la direction à l'écart de la surface inférieure (6b, 24b, 54b, 64b, 74b) par l'alimentation en air comprimé (A) pour former la chambre de mélange (6, 24, 54, 64, 74) ;
une deuxième étape consistant à mélanger le liquide de réparation de crevaison (R) et l'air comprimé (A) dans la chambre de mélange (6, 24, 54, 64, 74) et à décharger le mélange de la sortie (9) ; et
une troisième étape consistant à déplacer l'élément supérieur (10, 55, 65, 76) vers la surface inférieure (6b, 24b, 54b, 64b, 74b) par l'arrêt de l'alimentation en air comprimé (A).

8. Unité de bouteille (2, 22, 32, 42, 52, 62, 72) comprenant :
le dispositif de mélange (4, 23, 33, 43, 53, 63, 73) selon l'une quelconque des revendications 1 à 6 ; et
un récipient (5) permettant de contenir le liquide de réparation de crevaison (R), dans lequel
le récipient (5) a une partie d'embouchure (5a) permettant de contenir le liquide de réparation de crevaison (R) à l'intérieur du récipient (5), et
le dispositif de mélange (4, 23, 33, 43, 53, 63, 73) est fixé à la partie d'embouchure (5a).

9. Kit de réparation de crevaison (1, 21, 31, 41, 51, 61, 71) comprenant :
l'unité de bouteille (2, 22, 32, 42, 52, 62, 72) selon la revendication 8 ; et
un compresseur (3) permettant d'alimenter en air comprimé (A).

10. Kit de réparation de crevaison (21, 31, 41, 61) selon la revendication 9, dans lequel
le liquide de réparation de crevaison (R) est alimenté de la seconde entrée (8) vers la chambre de mélange (24, 64) par une pression différentielle provoquée par une pulsation du compresseur (3), et
le dispositif de mélange (23, 33, 43, 63) comporte une partie de maintien (26) permettant de bloquer le mouvement de l'élément supérieur (10, 65) dans une plage de la pression différentielle.
